# EUROPEAN PATENT APPLICATION

(11) **EP 2 144 198 A1**
(43) Date of publication of application: **13.01.2010**
(21) Application number: 09251736.6
(22) Date of filing: 06.07.2009
(51) Int. Cl.: G06Q 30/00

(54) **Advertisement delivery system, and client of the system**

(30) Priority: 09.07.2008 JP 2008179383
(71) Applicant: Brother Kogyo Kabushiki Kaisha, Nagoya-shi, Aichi-ken 467-8561 (JP)
(72) Inventor: Matsumoto, Hideto c/o Intellectual Property Dept., Nagoya-shi Aichi-ken 467-8562 (JP)
(74) Representative: Smith, Samuel Leonard

(57) **Abstract**

An advertisement data delivery system comprising at least one advertisement server (2) and a client (1) communicable with the at least one advertisement server through a network, wherein the client transmits to one advertisement server a data delivery request requesting the advertisement server to deliver data to the client, and in response to the data delivery request, the advertisement server delivers to the client at least one of advertisement data according to which the client displays on its display portion (17) an advertisement, and another address which is different from the address of the advertisement server to which the data delivery request has been transmitted, so that other advertisement data can be delivered from the above-indicated another address to the client.

## Description

### CROSS REFERENCE TO RELATED APPLICATION

The present application claims the priority from Japanese Patent Application No. 2008-179383 filed July 9, 2008, the disclosure of which is herein incorporated by reference in its entirety.

### BACKGROUND OF THE INVENTION

### 1. Field of the Invention

The present invention relates to an advertisement delivery system, and a client of the system.

### 2. Description of Related Art

In the field of information devices provided with a display, there has been proposed a technique for providing advertisement information on the display during a period in which the display is not required to be used for the information device, for example, during a printing operation of the information device or in a standby state of the information device. JP-2002-74155 A1 discloses an example of such a technique.

According to the technique disclosed in the above-identified publication JP-2002-74155 A1, the information device is configured to be able to obtain advertisement information from registered URLs (Uniform Resource Locators) or selected ones of registered servers, as described in paragraph [0006] of the publication.

According to another proposed technique for displaying advertisement information, client devices (hereinafter referred to simply as "clients") are configured to display the advertisement information obtained from contents servers. JP-2002-7844 A1 discloses an example of such a technique.

In the techniques disclosed in the above-identified publications, however, the clients are able to obtain an access to only the specific registered access points (URLs and servers), and the servers as the access points are merely configured to provide the clients with the advertisement information.

Therefore, the clients are not able to register new or substitute access points (new or substitute URLs and servers) that provide advertisement information, and are not able to obtain an access to the new or substitute access points. Accordingly, the servers as the new access points do not receive from the clients a request to provide the clients with the advertisement information. Thus, the advertisement information cannot be delivered from the new access points to the clients.

As described above, it has been difficult to enable the servers as the new or substitute access points to provide the clients with wider variety of advertisement information. The clients are enabled to obtain access to only the registered servers, and are not able to obtain access to the new access points, so that it is not possible to mitigate or prevent concentration of access to the registered access points.

### SUMMARY OF THE INVENTION

The present invention was made in an effort to solve the problems described above. It is therefore a first object of the present invention to provide an advertisement delivery system
wherein advertisement information can be delivered to clients from new access points not registered at the clients. A second object of the invention is to provide at least one of a client, an advertisement server and a management server, each of which is suitably configured to be a member of such an advertisement delivery system.

The first object indicated above can be achieved according to a first aspect of the present invention, which provides an advertisement delivery system comprising:
at least one advertisement server;
a client communicable with the at least one advertisement server through a network and configured to display an advertisement according to advertisement data delivered from the at least one advertisement server,
wherein the client includes:
an address memory portion which stores an address in the network;
a delivery requesting portion configured to transmit, to the address stored in the address memory portion, a data delivery request requesting the corresponding advertisement server to delivery data to the client;
a data obtaining portion configured to obtain the data delivered from the advertisement server in response to the data delivery request;
an advertisement display portion configured to display the advertisement according to the advertisement data, if the data obtained by the data obtaining portion data include the advertisement data; and
an address adding portion configured to store another address in the address memory portion if the data obtained by the data obtaining portion include the above-indicated another address which is different from the address of the advertisement server to which the data delivery request has been transmitted by the delivery requesting portion,
and wherein at least one of the at least one advertisement server includes:
   a delivery data determining portion configured to determine at least one of the advertisement data and the above-indicated another address to be delivered to the client, where the advertisement server receives the data delivery request; and
   a data delivery portion configured to deliver data including the at least one of the advertisement data and the above-indicated another address which has been determined by the delivery data determining portion.

In the advertisement delivery system constructed according to the first aspect of this invention, the client transmits to the advertisement server the data delivery request, and in response to this data delivery request, the advertisement server delivers data including at least one of the advertisement data and the above-indicated another address. When the advertisement data are delivered, the client displays the advertisement according to the received advertisement data. When the data including the above-indicated another address different from the address of the advertisement server to which the data delivery request has been transmitted are delivered from the advertisement server, the client stores the above-indicated another address in the address memory portion.

Unlike the prior art advertisement delivery system wherein the advertisement server does not permit a change of the address, the present advertisement delivery system is arranged such that the advertisement server informs the client of the above-indicated another address to be accessed by the client for delivery of the appropriate advertisement data to the client, so that the client is able to display an appropriate advertisement delivered from the above-indicated another address.

Where the advertisement delivery system includes a multiplicity of clients at respective addresses in the network, a change of the address to be accessed by the clients makes it possible to prevent concentration of access by all of the clients to only the address that was initially set.

The second object described above can be achieved according to a second aspect of this invention, which provides a client communicable with at least one advertisement server through a network and configured to display an advertisement according to advertisement data delivered from the at least one advertisement server, the client comprising:
an address memory portion which stores an address in the network;
   a delivery requesting portion configured to transmit, to the address stored in the address memory portion, a data delivery request requesting the corresponding advertisement server to delivery data to the client;
   a data obtaining portion configured to obtain the data delivered from the advertisement server in response to the data delivery request;
   an advertisement display portion configured to display the advertisement according to the advertisement data, if the data obtained by the data obtaining portion include the advertisement data; and
   an address adding portion configured to store another address in the address memory portion if the data obtained by the data obtaining portion include the above-indicated another address which is different from the address of the advertisement server to which the data delivery request has been transmitted by the delivery requesting portion.

According to the second aspect of this invention, the client has the same arrangement as the client of the advertisement delivery system according to the first aspect of this invention. Namely, the client according to the second aspect of the invention cooperates with the at least one advertisement server to constitute the advertisement delivery system.

The second object can also be achieved according to a third aspect of this invention, which provides an advertisement server communicable with a client through a network and configured to deliver to the client advertisement data according to which the client displays advertisement, the advertisement server comprising:
a delivery data determining portion configured to determine at least one of the advertisement data and another address to be delivered to the client, where the advertisement server receives the data delivery request, the above-indicated another address being different from the address of the advertisement server to which a data delivery request has been transmitted from the client; and
a data delivery portion configured to deliver data including the at least one of the advertisement data and the above-indicated another address, which has been determined by the delivery data determining portion.

The second object can also be achieved according to a fourth aspect of this invention, which provides a management server communicable with at least one advertisement server and a client through a network, the management sever comprising:
an access-restricted-address determining portion configured to determine whether the address received from the client is an access-restricted address an access to which is restricted; and
a substitute address delivery portion configured to deliver to the client a substitute address in place of the access-restricted address, where the access-restricted-address determining portion determines that the address received from the client is the access-restricted address.

### BRIEF DESCRIPTION OF THE DRAWINGS

The above and other objects, features, advantages and technical and industrial significance of the present invention will be better understood by reading the following detailed description of preferred embodiments of the present invention, when considered in connection with the accompanying drawings, in which:

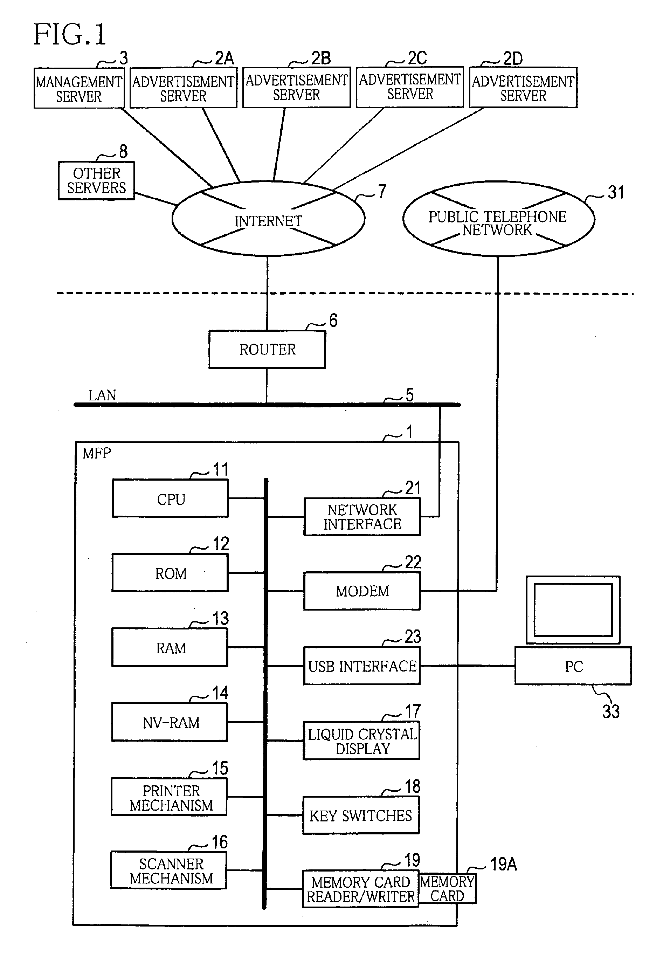

Fig. 1 is a block diagram showing an arrangement of an advertisement delivery system constructed according to a first embodiment of the present invention;
Figs. 2A and 2B are tables indicating data stored in an MFP of the advertisement delivery system of Fig. 1;
Figs. 3A-3D are views indicating data stored in advertisement servers of the advertisement delivery system;
Fig. 4 is a table indicating a black list stored in a management server of the advertisement delivery system;
Fig. 5 is a flow chart illustrating an advertisement display control routine executed by the MFP;
Fig. 6 is a flow chart illustrating a control routine executed by the advertisement servers;
Fig. 7 is a flow chart illustrating a control routine executed by the management server;
Fig. 8 is a flow chart illustrating a registered-URL verification control routine executed by the MFP;
Fig. 9 is a view indicating various kinds of data in Example 1;
Fig. 10 is a view indicating various kinds of data in Example 2;
Fig. 11 is a view indicating various kinds of data in Example 3;
Fig. 12 is a view indicating various kinds of data in Example 4;
Fig. 13 is a view indicating various kinds of data in Example 5; and
Fig. 14 is a flow chart illustrating an advertisement display control routine executed by the MFP in a second embodiment of this invention.

### DETAILLED DESCRIPTION OF THE PREFERRED EMBODIMENTS

Preferred embodiments of the present invention will be described by reference to the drawings.

### [Arrangement of Advertisement Delivery System]

Reference is first made to the block diagram showing an arrangement of an advertisement delivery system constructed according to a first embodiment of this invention.

The advertisement delivery system of the present embodiment includes an MFP (Multi-Function Peripheral) 1, advertisement servers 2A-2D and a management server 3. The MFP 1 is connected to a LAN (Local Area Network) 5, which is connected through a router 6 to an internet 7.

The advertisement servers 2A, 2B, 2C and 2D, and the management server 3 are connected to the internet 7, so that the MFP 1 is able to perform data communication with the advertisement servers 2A, 2B, 2C and 2D and management server 3 through the internet 7. It is noted that other servers 8 are also connected to the internet, so that the MFP 1 is able to obtain an access to those other servers 8.

In the present advertisement delivery system, the MFP 1 is a device corresponding to a client who transmits an advertisement data delivery request asking the advertisement servers 2A, 2B, 2C and 2D to deliver advertisement data, when the MFP 1 is performing one of predetermined functions, or when the MFP 1 is placed in a standby state. When the advertisement server 2A, 2B, 2C, 2D receives the advertisement data delivery request from the MFP 1, the advertisement server delivers the advertisement data or URL data to the MFP 1. The URL data correspond to an address (a web address).

The MFP 1 receives the advertisement data delivered from the advertisement server 2A, 2B, 2C, 2D. When the URL data are delivered, the MFP 1 inquires the management server 3 as to whether an access to the URL represented by the URL data is restricted (inhibited). If the access to the URL in question is not restricted (inhibited), the MFP 1 obtains an access to the URL, and proceeds with the steps following the transmission of the advertisement data delivery request to the advertisement server 2A, 2B, 2C, 2D.

After the MFP 1 has received the advertisement data, the MFP 1 displays an advertisement according to the received advertisement data, while the MFP 1 is performing a selected one of its predetermined functions or placed in its standby state.

[Arrangement of MFP 1] The arrangement of the MFP 1 will be described in greater details. The MFP 1 is a multi-function device capable of performing a plurality of different functions such as a scanning function, a printing function, a copying function, a facsimile function, a telephone function, a photograph printing function, a network communication function, etc. The MFP 1 includes a CPU 11, a ROM 12, a RAM 13, an NV-RAM (Non-Volatile RAM) 14, a printer mechanism 15, a scanner mechanism 16, a liquid crystal display 17, key switches 18, a memory card reader/writer 19, a network interface 21, a MODEM 22, and a USB (Universal Serial Bus) interface 23.

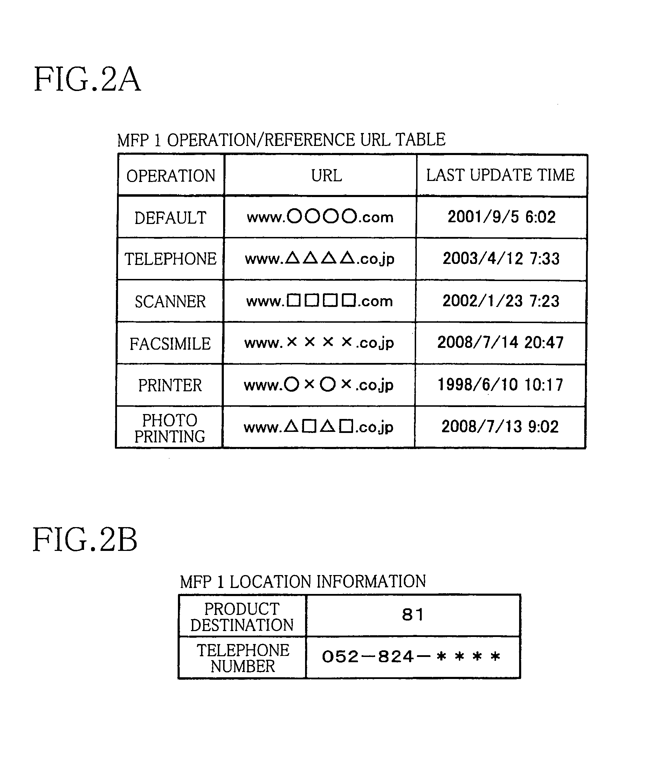

The ROM 12 stores URL data representative of URL of the management server 3, and default image data representative of images to be displayed during a printing operation or in the standby state of the MFP 1. The NV-RAM 14 stores various kinds of data such as setup data of the MFP 1, which should be retained even while the MFP 1 is in the power-off state. Those kinds of data include an operation/reference URL table indicated in Fig. 2A, and location information indicated in Fig. 2B.

The operation/reference URL table indicated in Fig. 2A has a plurality of sets of data, more specifically, six sets of data each set consists of operation data indicative of an operation (function) of the MFP1, URL data and last update time data. When the operation to be performed by the MFP 1 is determined, the URL data and last update time data corresponding to the operation can be read out from the table.

The URL data represent reference URLs (addresses) which deliver advertisement data relating to the different operations of the MFP 1. For instance, the URL data corresponding to the "telephone" operation represent the reference URL which delivers advertisement data relating to the telephone, and the URL data corresponding to the "scanner" operation represent the reference URL which delivers advertisement data relating to the scanner.

The operation data and URL data of the operation/reference URL table may be updated as described below. When new advertisement data are received from the advertisement server 2, the last update time data indicate of the date of receipt of the advertisement data are stored in the table. As indicated in Fig. 2B, the location information consists of product designation data indicative of the designated country (e.g., Japan or USA) to which the MFP 1 is shipped, and telephone number data indicative of the telephone number assigned to the MFP 1.

The use of the various kinds of data described above will be described in detail. The printer mechanism 15 is arranged to perform a color printing operation in a known manner, for example, by a photoconductive or ink-jet printing method. When the "PHOTO PRINTING" is selected, for example, an operation to print a photograph is performed by the printer mechanism 15.

The liquid crystal display 17 is an information display portion of the MFP 1, which is provided to indicate a state of the MFP1 and to display other information such as advertisements relating to the different operations or functions of the MFP 1.

The memory card reader/writer 19 is configured to read and write data from and on a memory card 19A. When the photograph printing operation is performed, photograph data are read out from the memory card 19A by the memory card reader/writer 19, and the printer mechanism 15 is operated according to the photograph data.

The MFP 1 is connected to the LAN 5 through the network interface 21, and to a public telephone network 31 through the MODEM 22, so that the MFP 1 is capable of performing the facsimile and telephone functions. The MFP 1 is further connected to a PC (Personal Computer) 33 through the USB interface 23, so that the various functions of the MFP 1 are controllable by the PC 33.

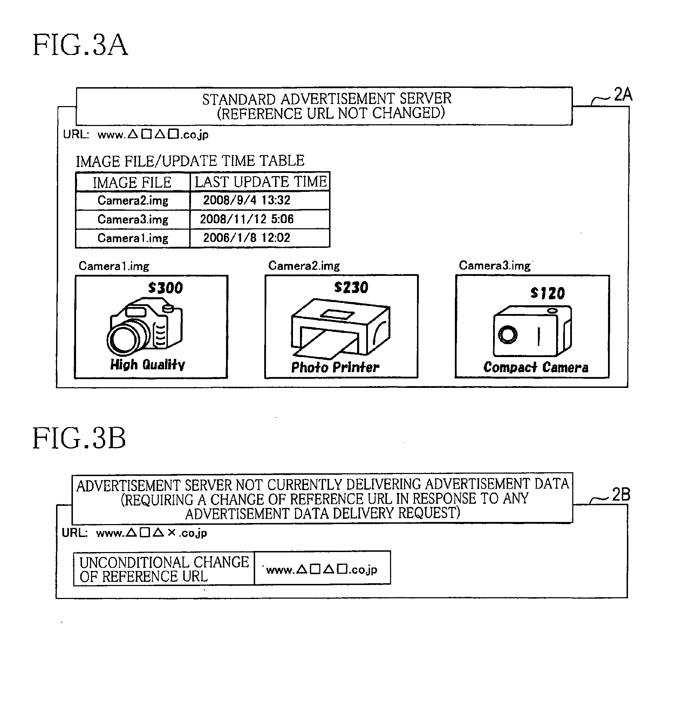

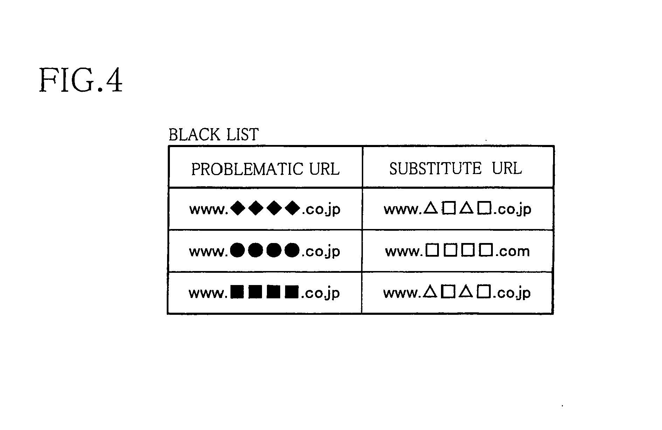

[Data Administered by Advertisement Servers and Management Server]
Data to be administered by the advertisement servers 2A, 2B, 2C and 2D and the management server 3 will be described in greater detail, by reference to Figs. 3A-3D and Fig. 4.

The advertisement server 2A is a standard server the URL of which is www.Δ□Δ□.co.jp and which is configured to perform only a function of delivering advertisement data. The advertisement server 2A has a plurality of image files (three image files as indicated in Fig. 3A) which are advertisement data sets that can be updated as desired, and which are respectively accompanied by last update times. Namely, the advertisement server 2A has an image file/update time table as indicated in Fig. 3A.

The advertisement server 2B is a server the URL of which is www. .Δ□Δx.co.jp and which is not currently delivering the advertisement data. Namely, this advertisement server 2B was used as the effective advertisement server, but is not currently used as the effective advertisement server.

If the MFP 1 does not recognize that the advertisement server 2B is not currently used as the effective advertisement server, the advertisement sever 2B may be accessed by the MFP 1. If the advertisement server 2B receives the advertisement data delivery request from the MFP 1, the advertisement server 2B transmits a request requiring the MFP 1 to change the reference URL, rather than delivers the advertisement data to the MFP 1. The request requiring the MFP 1 to change the reference URL is accompanied by the reference URL www. .Δ□Δ□.co.jp assigned to the advertisement server 2A, which reference URL must be thereafter accessed by the MFP 1.

After the above-indicated reference URL of the advertisement server 2A is transmitted to the MFP 1, the MFP 1 obtains an access to the advertisement server 2A, rather than to the advertisement server 2B.

The advertisement server 2C is a server the URL of which is www. .Δ□xx.co.jp and which transmits the request requiring the MFP 1 to change the reference URL, like the advertisement server 2B. In the present specific example, this advertisement server 2C has an undesirable behavior, which is preferably not used as an advertisement server in the system.

The request transmitted from the advertisement server 2C is accompanied by the reference URL www. ◆◆◆◆.co.jp, to which the original reference URL has been unduly changed by a third party. For instance, this reference URL is the reference URL assigned to one of the other servers 8, which one server 8 delivers undesirable contents.

Namely, the advertisement server 2C is a server the original reference URL of which has been unduly replaced by the reference URL of one of the other servers 8, so that the MFP 1 is required to obtain an access to that server 8.

To solve the problem that the reference URL www. ◆◆◆◆.co.jp is accessed by the MFP 1, the MFP 1 is configured to refer to a black list stored in the management server 3. The use of the black list to restrict the access to the reference URL www. ◆◆◆◆.co.jp will be described later.

The advertisement server 2D is a server the reference URL of which is www.ΔxΔx.co.jp and which delivers different kinds of advertisement data depending upon the location of the MFP 1.

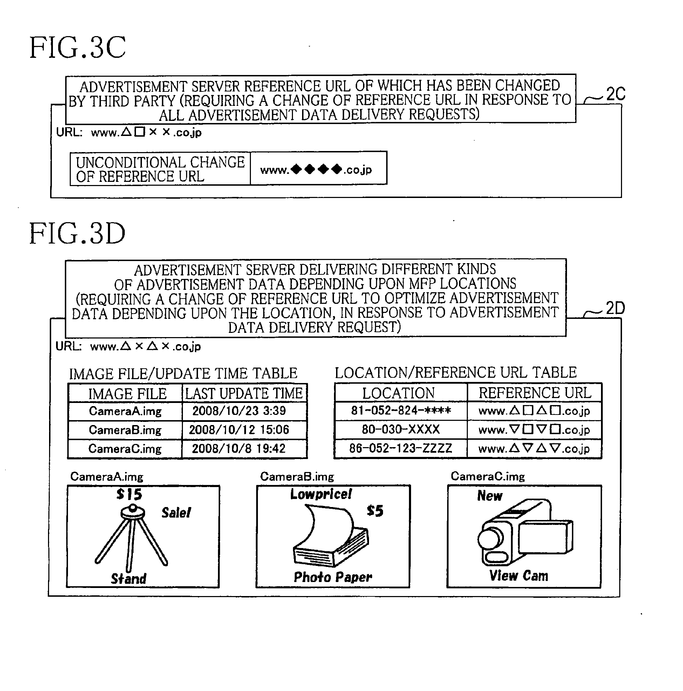

Described in detail, this advertisement server 2D has a plurality of image files (three image files as indicated in Fig. 3D) which are advertisement data sets that can be updated as desired, and which are respectively accompanied by last update times. The advertisement server 2D further has a location/reference URL table which indicates reference URLs corresponding to respective different locations of the MFP 1.

When the advertisement server 2D receives the advertisement data delivery request from the MFP 1, the advertisement sever 2D determines whether the location of the MFP 1 is registered as one of the locations listed in the location/reference URL table. If the location of the MFP 1 is registered in the table, the advertisement server 2D delivers the advertisement data to the MFP 1. If the location is not registered, the advertisement server 2D transmits to the MFP 1 the reference URL corresponding to the registered location of the MFP 1.

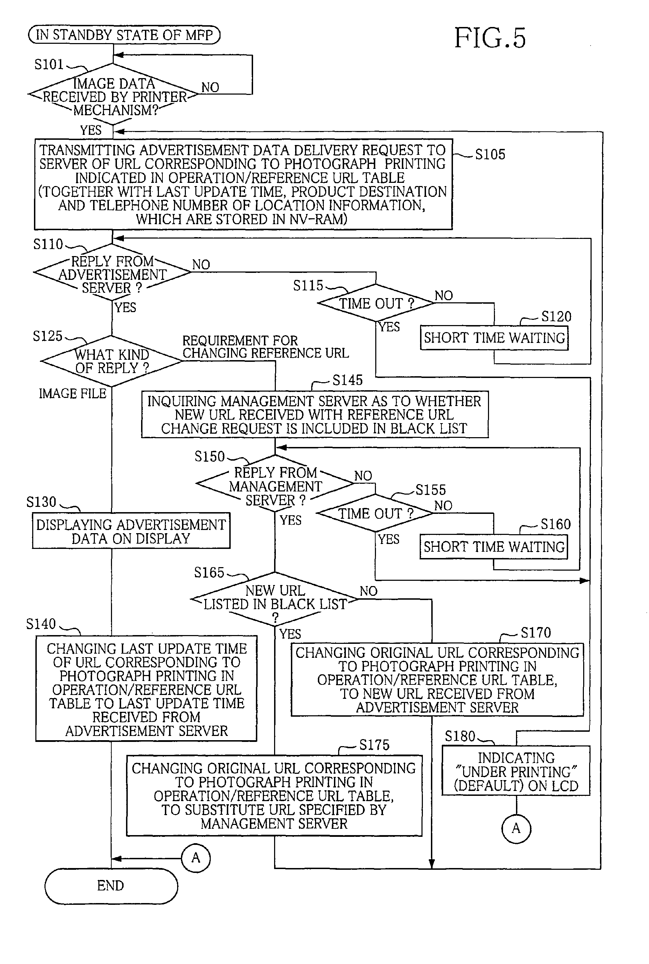

[Control Routines Executed by MFP and Servers]
Referring next to Figs. 5-8, there will be described control routines executed by the MFP 1, advertisement servers 2A, 2B, 2C and 2D and management server 3. The behavior of the present advertisement delivery system varies depending upon the operating environment. Seven different specific examples (hereinafter referred to as "Examples 1-7") of operation of the advertisement delivery system will be described.

<Example 1> In the case of normal display of advertisement
In the Example 1 described below, the advertisement server 2A is accessed by the MFP 1, and the advertisement is normally displayed on the MFP 1. In the present advertisement delivery system, the MFP 1 displays the advertisement when the MFP 1 is performing one of the predetermined functions or is placed in the standby state. In the following Examples, the MFP 1 displays the advertisement when the printer mechanism 15 initiates a printing operation. That is, the MFP 1 has the scanning, copying, printing, facsimile and photograph printing functions, as described above. When one of these functions is performed, the printer mechanism 15 is operated to print an image on a recording medium according to image data. In the present embodiment, the advertisement is displayed when the printing operation is initiated by the printer mechanism 15.

In the MFP 1, the printer mechanism 15 is operated to perform the above-indicated functions. In this specific example, the MFP 1 displays the advertisement when the photograph printing operation is initiated, with the card 19A set in the memory card reader/writer 19. It is to be understood that the advertisement is displayed when the printing operation is performed according to image data obtained by the facsimile function or image data received from the PC 33 through the USB interface 23.

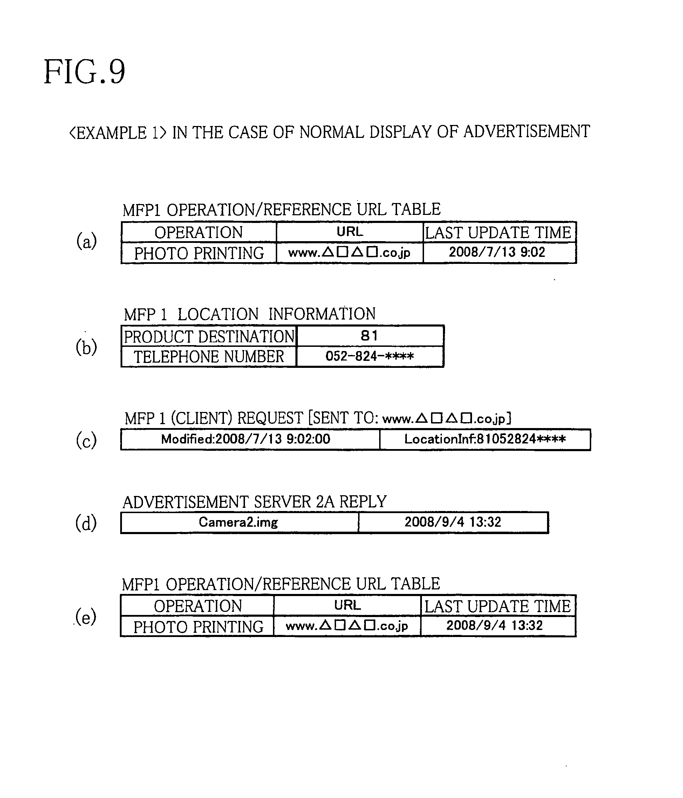

The control routine of Fig. 5 is executed while the MFP 1 is placed in the standby state. This control routine is initiated with S101 to determine whether image data have been received by the printer mechanism 15, that is, to determine whether the printer mechanism 15 has initiated a printing operation. This step S101 is repeatedly implemented until an affirmative determination (YES) is obtained. When the affirmative determination is obtained in the step S101, the control flow goes to step S105. In this example, the image data received by the printer mechanism 15 are data which are stored in the memory card 19A and which represent an image which the operator of the MFP 1 desires to print. In the step S105, the MFP 1 transmits the advertisement data delivery request to the advertisement server 2A the URL of which corresponds to the photograph printing operation indicated in the operation/reference URL table. When this step S105 is implemented, operation/reference URL table stored in the NV-RAM 14 includes the URL data and last update time data corresponding to the "PHOTO PRINTING" operation, as indicated at (a) in Fig. 9, and the location information stored in the NV-RAM 14 includes the product destination data and telephone number data as indicated at (b) in Fig. 9.

According to the data indicated above, the advertisement server 2A is accessed by the MFP 1 which transmits the advertisement data delivery request to the URL indicated at (c) in Fig. 9. The advertisement data delivery request is accompanied by the last update time data, and the product destination data and telephone number data, as indicated at (c) in Fig. 9.

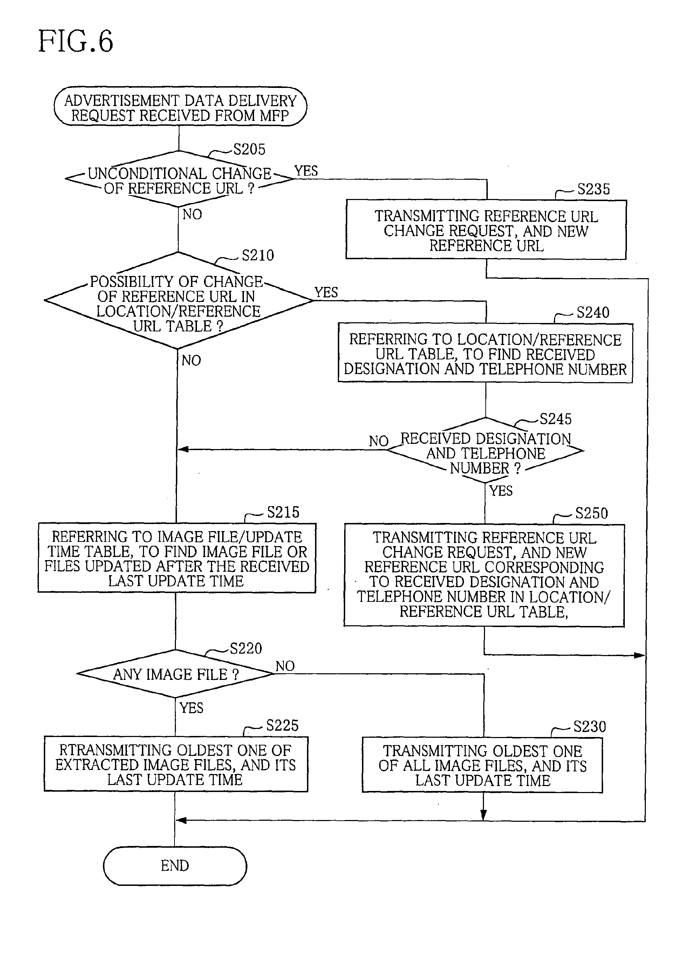

When the advertisement data delivery request is transmitted from the MFP 1 to the advertisement server 2A, the advertisement server 2A initiates the control routine illustrated in the flow chart of Fig. 6. The control routine of Fig. 6 is initiated with step S205 to determine whether the reference URL should be unconditionally changed. In the present Example 1, the server 2A does not have the information requiring an unconditional change of the reference URL, as indicated in Fig. 3A. Accordingly, a negative determination (NO) is obtained in the step S205, and the control flow goes to step S210. If an Example 2 described below, an affirmative determination (YES) is obtained in the step S205, and the control flow goes to step S235.

In the step S210, the advertisement server 2A refers to the location/reference URL table, to determine whether there is a possibility of change of the reference URL. In the Example 1 in which the advertisement server 2A does not have the location/reference URL table, as indicated in Fig. 3A, so that a negative determination (NO) is obtained in step the S210. In Examples 4 and 5 described below, an affirmative determination (YES) is obtained in step the S210.

Since the negative determination (NO) is obtained in the step S210, the control flow goes to step S215 in which the advertisement server 2A refers to the image file/update time table indicated in Fig. 3A, to find an image file or files that is/are updated after the last update time received from the MFP 1. The step S215 is followed by step S220 to determine whether any image file has been found in step S215. If an affirmative determination (YES) is obtained in the step S220, the control flow goes to step S225 in which the advertisement server 2A transmits to the MFP 1 the oldest one of the mage files found in step S215, and the last update time data of the oldest image file. In the Example 1, the control routine of Fig. 6 executed by the advertisement server 2A is terminated with step S225.

In the step S225, the image file "Camera2.img" and its last update time as indicated at (d) in Fig. 9 are transmitted to the MFP 1.

If no image file updated after the last update time received from the MFP 1 is found in step S220, that is, if a negative determination (NO) is obtained in the step S220, the control flow goes to step S230 in which the advertisement server 2A transmits to the MFP 1 the oldest one of all image files in the image file/update time table, and its last update time. In this case, the control routine of Fig. 6 is terminated with step S230.

Thus, the steps S215-S230 are implemented to transmit to the MFP 1 the oldest one of the image files updated after the last update time received from the MFP 1, or the oldest one of all image files stored in the advertisement server 2A, if no image files updated after the last update time received from the MFP 1 are found in step S220.

During the delivery of the advertisement data from the advertisement server 2 in the manner described above, the MFP 1 implements step S 110 to determine whether a reply has been received from the advertisement server 2, as indicated in the flow chart of Fig. 5. If a negative determination (NO) is obtained in the step S110, the control flow goes to step S115 to determine whether a predetermined long time has elapsed. If a negative determination (NO) is obtained in the step S115, the control flow goes to step S120 in which the MFP 1 waits for a predetermined short time (e.g., several seconds) before the control flow goes back to the step S110 to determine again whether a reply has been received from the advertisement server 2A.

If a reply has been received from the advertisement server 2A, that is, if an affirmative determination (YES) is obtained in the step S110, the control flow goes to step S125 to determine whether the reply includes advertisement data in the form of an image file, or a request requiring a change of the reference URL to be accessed for delivery of the advertisement data.

In the Example 1 in which the advertisement server 2A delivers the image file, the control flow then goes to step S130 in which the received advertisement data in the form of the image file are displayed on the liquid crystal display 17.

For instance, the liquid crystal display 17 displays an image according to the image file "Camera2.img" as indicated in Fig. 3A. The image file "Camera2.img" represents an advertising image of a product relating to or used for the photograph printing operation, in which the user of the MFP 1 performing the photograph printing operation is interested. Thus, the product is effectively advertised during the photograph printing operation.

After the advertisement data are displayed on the MFP 1 in step S 130, the control flow goes to step S140 in which the last update time corresponding to the "PHOTO PRINTING" in the operation/reference URL table is changed to the last update time received from the advertisement server 2A. Thus, one cycle of execution of the control routine of Fig. 5 by the MFP 1 is terminated. As a result, the operation/reference URL table is updated as indicated at (e) in Fig. 9.

<Example 2> In the case of a reply from advertisement server, which requires a change of the reference URL (in the absence of URL in the black list in the management server)
In the Example 2 described below, the advertisement server 2B is accessed by the MFP 1, and the reference URL is changed.

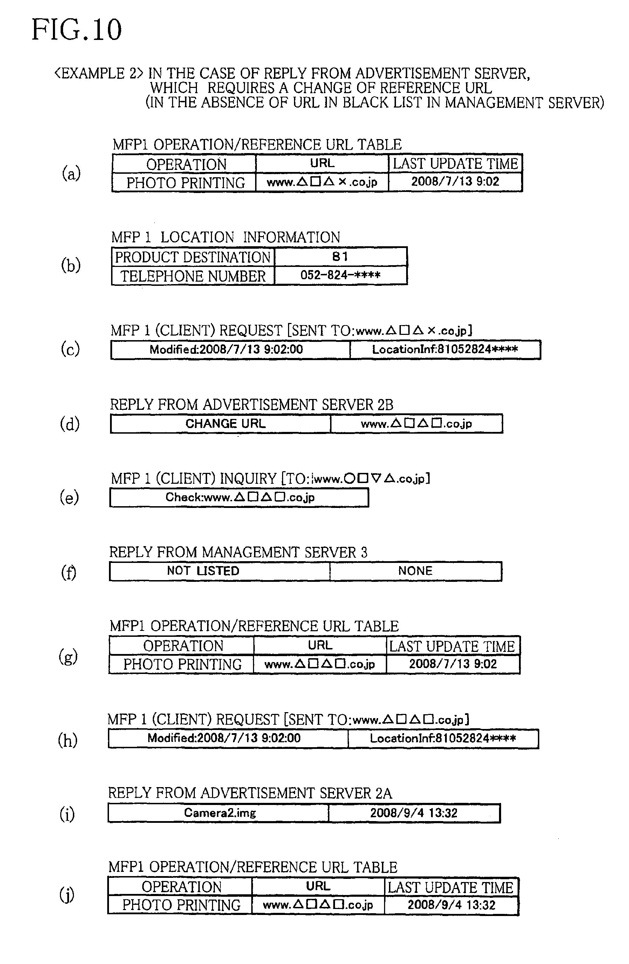

Where the operation/reference URL table stored in the NV-RAM 14 of the MFP 1 includes the URL data and last update time data as indicated at (a) in Fig. 10, and the location information stored in the NV-RAM 14 includes the location information as indicated at (b) in Fig. 10, the step S 105 described above is implemented so that the advertisement server 2B is accessed by the MFP 1 which transmits the advertisement data delivery request to the reference URL indicated at (c) in Fig. 10. The request is accompanied by the last update time data, and the product destination data and telephone number data of the MFP 1, as indicated at (c) in Fig. 10.

When the advertisement data delivery request is transmitted from the MFP 1 to the advertisement server 2B, the advertisement server 2B initiates the control routine illustrated in the flow chart of Fig. 6. The control routine of Fig. 6 is initiated with step S205 to determine whether the reference URL should be unconditionally changed.

In the present Example 2, the server 2B has the information requiring an unconditional change of the reference URL, as indicated in Fig. 3B. Accordingly, the affirmative determination (YES) is obtained in the step S205, and the control flow goes to step S235.

In the step S235, the advertisement server 2B transmits to the MFP 1 a reference URL change request and a new reference URL to be accessed by the MFP 1. In this Example 2, the control routine of Fig. 6 is terminated with step S235. The reference URL change request takes the form of text data "CHANGE URL" as indicated at (d) in Fig. 10, and is accompanied by the new reference URL "www.Δ□Δ□.co.jp", which is the URL assigned to the advertisement server 2A.

In the Example 2 in which the reference URL change request is transmitted from the advertisement server 2B, the MFP 1 repeatedly implements the steps S110, S 115 and S120 of Fig. 5 as in the Example 1, to determine whether a reply has been received from the advertisement server 2B.

If the affirmative determination (YES) is obtained in the step S110, the control flow goes to the above-described step S125 to determine whether the reply received from the advertisement server 2 includes advertisement data in the form of the image file, or the reference URL change request.

In the present Example 2 in which the reference URL change request is transmitted from the advertisement server 2B, the step S125 is followed by step S145 to inquire the management server 3 as to whether the new reference URL received together with the reference URL change request is included in the black list stored in the management server 3. The new reference URL is another address or URL of the advertisement server which is different from the address or URL of the advertisement server 2B to which the data delivery request has been transmitted by the MFP 1.

In the step S145, the URL indicated at (e) in Fig. 10 is accessed by the MFP 1 to inquire the management server 3 to check if the new reference URL www.Δ□Δ□.co.jp is included in the black list. To this end, data "Check: www.Δ□Δ□.co.jp" are transmitted to the management server 3, as also indicated at (e) in Fig. 10.

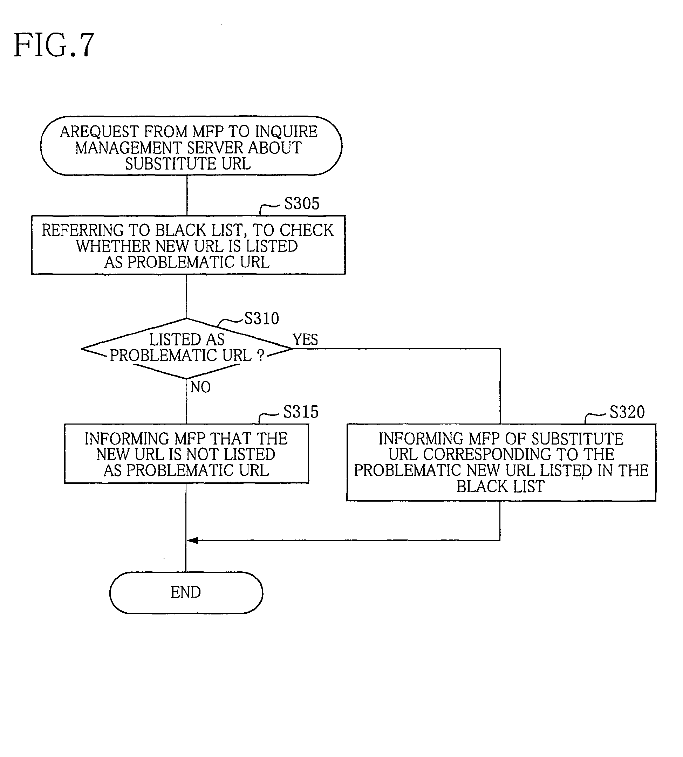

When the inquiry about the new reference URL is transmitted from the MFP 1 to the management server 3, the control routine illustrated in the flow chart of Fig. 7 is initiated with step S305 in which the management server 3 refers to the black list, to check whether the new reference URL in question is listed as a problematic URL in the black list. The step S305 is followed by step S310 to determine whether the new reference URL is included as one of the problematic URLs in the black list.

In the step S305, the management server 3 refers to the black list illustrated in Fig. 4, to check if the new reference URL transmitted in the step S 145 from the MFP 1 to the management server 3 is listed in the black list. In the present specific example, the new reference URL is www.Δ□Δ□.cojp, which is not listed as any of the problematic URLs in the black list of Fig. 4. Accordingly, a negative determination (NO) is obtained in the step S310.

Since the negative determination (NO) is obtained in the step S310, the control flow goes to step S315 in which the management server 3 informs the MFP 1 that the new URL is not listed in the black list, as indicated at (f) in Fig. 10. In this case, the control routine of Fig. 7 is terminated with step S315. In the Example 2 wherein data "NOT LISTED" are followed by dummy data "NONE" in a data memory area, as also indicated at (f) in Fig. 10. The dummy data do not perform any specific function. The use of the data memory area will be described with respect to the following Example 3.

During the above-described operation of the management server 3 to check if the new URL is listed in the black list, the MFP 1 implements step S 150 to determine whether a reply has been received from the management server 3. If a negative determination (NO) is obtained in the step S150, the control flow goes to step S155 to determine whether a predetermined long time has elapsed. If a negative determination (NO) is obtained in the step S 155, the control flow goes to step S160 in which the MFP 1 waits for a predetermined short time (e.g., several seconds) before the control flow goes back to the step S 150 to determine again whether a reply has been received from the management server 3.

If a reply has been received from the management server 3, the control flow goes to step S165 to determine whether the new reference URL is listed in the black list. In this Example 2 in which the new reference URL received from the advertisement server 3B is not listed in the black list, as described above, the MFP 1 receives data "NOT LISTED", so that a negative determination (NO) is obtained in the step S165.

Since the negative determination (NO) is obtained in the step S165, the control flow goes to step S170 in which the MFP 1 changes the original reference URL corresponding to the photograph printing operation in the operation/reference URL table, to the new reference URL received from the advertisement server 2B. Thus, the original reference URL of the advertisement server 2B corresponding to the photograph printing operation in the operation/reference URL table is changed to the new reference URL, which is the reference URL assigned to the advertisement server 2A, as indicated at (g) in Fig. 10.

After the step S 170 is implemented, the MFP 1 goes back to the step S 105, to initiate the next cycle of execution of the control routine of Fig. 5. Since the original reference URL corresponding to the photograph printing operation in the operation/reference URL table has been changed to the reference URL of the advertisement server 2A, this cycle of execution of the control routine is identical with that in the Example 1 described above.

That is, the advertisement data delivery request is sent to the advertisement server 2A having the reference URL www.Δ□Δ□.co.jp as indicated at (h) in Fig. 10, to ask the advertisement server 2A to deliver the advertisement data. The request is accompanied by the last update time, and the location information including the product destination and telephone number of the MFP 1. In response to the advertisement data delivery request from the MFP1, the advertisement server 2A implements the step S225 (or step S230) transmits to the MFP1 the image file "Camera2.img", its last update time, etc. According to the image file received from the advertisement server 2A, the MFP 1 displays an advertising image in the step S 130, and updates the operation/reference URL table to that as indicated at (j) in Fig. 10, in the step S140, as in the Example 1 described above.

<Example 3> In the case of a reply from advertisement server, which requires a change of the reference URL (in the case of an access to advertisement server URL of which has been changed by a third party to a substitute URL listed in the black list in the management server) In the Example 3 described below, the advertisement server 2C is accessed by the MFP 1, and the reference URL is changed.

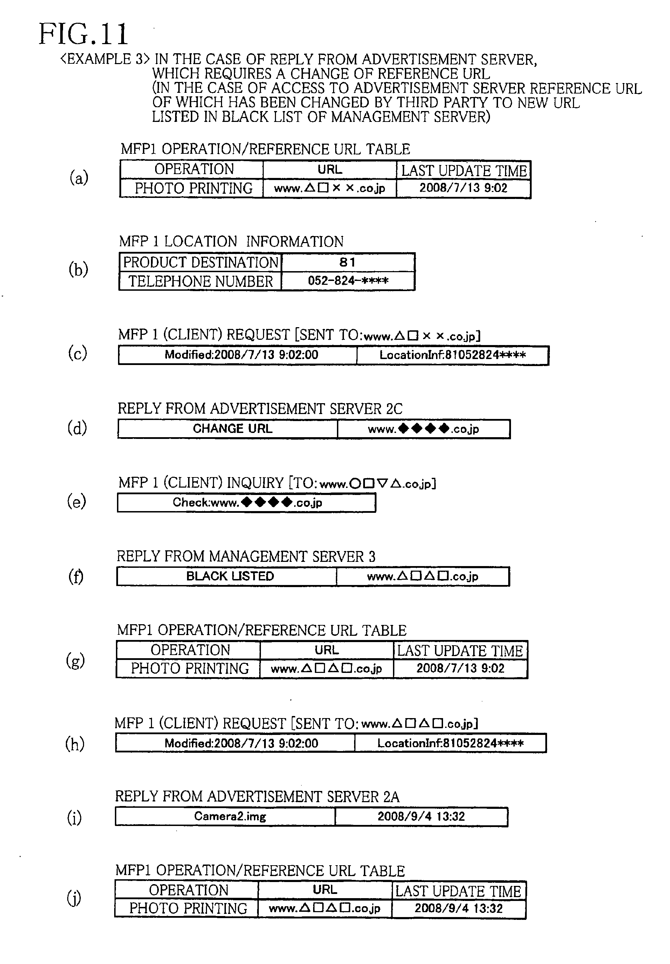

Where the operation/reference URL table stored in the NV-RAM 14 of the MFP 1 includes the URL data and last update time data as indicated at (a) in Fig. 11, and the location information stored in the NV-RAM 14 includes the location information as indicated at (b) in Fig. 11, the step S105 described above is implemented so that the advertisement server 2C is accessed by the MFP 1 which transmits the advertisement data delivery request to the reference URL indicated at (c) in Fig. 11. The request is accompanied by the last update time data, and the product destination data and telephone number data, as indicated at (c) in Fig. 11.

When the advertisement data delivery request is transmitted from the MFP 1 to the advertisement server 2C, the advertisement server 2C initiates the control routine illustrated in the flow chart of Fig. 6. The control routine of Fig. 6 is initiated with step S205 to determine whether the reference URL should be unconditionally changed.

In the present Example 3, the server 2C has the information requiring an unconditional change of the reference URL, as indicated in Fig. 3C. Accordingly, the affirmative determination (YES) is obtained in the step S205, and the control flow goes to step S235, as in the Example 2 described above. In the step S235, the advertisement server 2C transmits to the MFP 1 a reference URL change request and a new reference URL to be accessed by the MFP 1. The new reference URL is another address of URL of the advertisement server which is different from the address of the advertisement server 2C to which the data delivery request has been transmitted by the MFP 1. The reference URL change request takes the form of text data "CHANGE URL" as indicated at (d) in Fig. 11, and is accompanied by the new reference URL "www. ◆◆◆◆.co.jp", which is the URL assigned to one of the other servers 8.

Since the reference URL change request is received by the MFP 1, the step S125 is followed by step S145 to inquire the management server 3 as to whether the new reference URL received together with the reference URL change request is included in the black list stored in the management server 3. In the step S145, the URL indicated at (e) in Fig. 11 is accessed by the MFP 1 to inquire the management server 3 to check if the new reference URL www. ◆◆◆ ◆.co.jp is included in the black list. To this end, data "Check: www. ◆◆◆◆.co.jp" are transmitted to the management server 3, as also indicated at (e) in Fig. 11.

When the inquiry about the new reference URL is transmitted from the MFP 1 to the management server 3, the control routine illustrated in the flow chart of Fig. 7 is initiated with step S305 in which the management server 3 refers to the black list, to check whether the new reference URL in question is listed as a problematic URL in the black list. The step S305 is followed by the step S310 to determine whether the new reference URL is included as one of the problematic URLs in the black list.

The Example 3 is identical with the Example 2, in the control flow up to the step S305. In the Example 3, however, the new reference URL transmitted from the MFP 1 to the management server 3 is listed as one of the problematic URLs in the black list of Fig. 4. In this respect, the Example 3 is different from the Example 2.

That is, the new reference URL www. ◆◆◆◆.co.jp indicated at (e) in Fig. 11 is listed in the black list of Fig. 4. Accordingly, an affirmative determination (YES) is obtained in the step S310, and the control flow goes to step S320.

In the step S320, data "BLACK LISTED" and a substitute reference URL corresponding to the new reference URL received from the MFP1 are transmitted to the MFP 1, as indicated at (f) in Fig. 11. The data "BLACK LISTED" indicate that the new reference URL is listed in the black list.

The data "BLACK LISTED" are followed by data in the data memory area, which represent the substitute reference URL corresponding to the new reference URL received from the MFP 1. In this respect, the Example 3 is different from the Example 2.

The substitute reference URL corresponding to the new reference URL www. ◆◆◆ ◆.co.jp received from the MFP 1 is read out from the black list indicated in Fig. 4. This substitute reference URL is the reference URL www.Δ□Δ□.co.jp of the advertisement server 2A, as indicated in Fig. 4 and at (f) in Fig. 11

If a reply has been received from the management server 3, the control flow goes to step S165 to determine whether the new reference URL is listed in the black list. In this Example 3 in which the new reference URL received from the advertisement server 3C is listed in the black list, as described above, the MFP 1 receives data "BLACK LISTED", so that an affirmative determination (YES) is obtained in the step S165.

Since the affirmative determination (YES) is obtained in the step S165, the control flow goes to step S 175 in which the MFP 1 changes the original reference URL corresponding to the photograph printing operation in the operation/reference URL table, to the substitute reference URL received from the management server 3. Thus, the original reference URL of the advertisement server 2C corresponding to the photograph printing operation in the operation/reference URL table is changed to the substitute reference URL, which is the reference URL assigned to the advertisement server 2A, as indicated at (g) in Fig. 11.

After the step S 175 is implemented, the MFP 1 goes back to the step S105, to initiate the next cycle of execution of the control routine of Fig. 5. Since the original reference URL corresponding to the photograph printing operation in the operation/reference URL table has been changed to the reference URL of the advertisement server 2A, this cycle of execution of the control routine is identical with that in the Example 1 described above.

That is, the advertisement data delivery request is sent to the advertisement server 2A having the reference URL www.Δ□Δ□.co.jp as indicated at (h) in Fig. 11, to ask the advertisement server 2A to deliver the advertisement data. The request is accompanied by the last update time, and the location information including the product destination and telephone number. In response to the advertisement data delivery request from the MFP1, the advertisement server 2A implements the step S225 (or step S230) transmits to the MFP1 the image file "Camera2.img", its last update time, etc. According to the image file received from the advertisement server 2A, the MFP 1 displays an advertising image in the step S 130, and updates the operation/reference URL table to that as indicated at (j) in Fig. 11, in the step S140, as in the Example 1 described above.

<Example 4> In the case of a reply from advertisement server, for normal advertisement (without changing reference URL according to location/reference URL table) In the Example 4 described below, the advertisement server 2D is accessed by the MFP 1, but the reference URL is not changed.

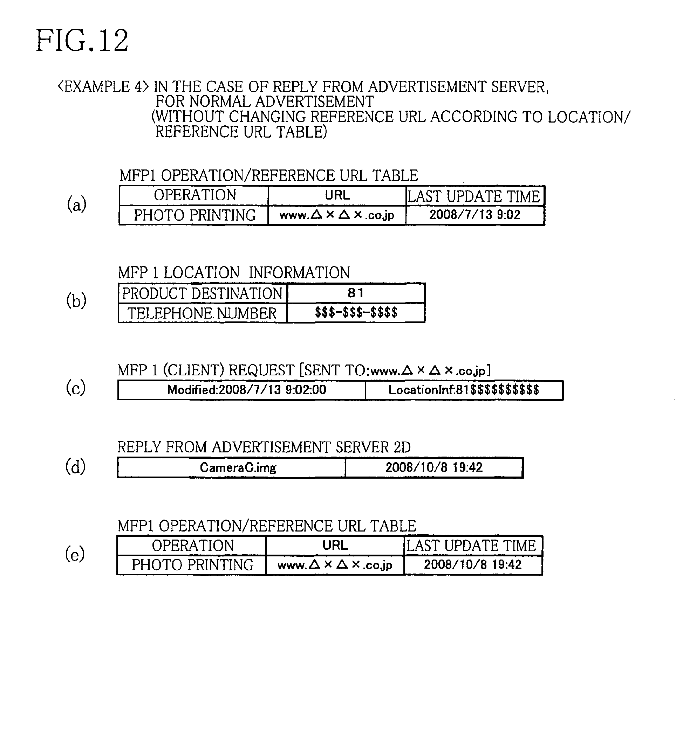

Where the operation/reference URL table stored in the NV-RAM 14 of the MFP 1 includes the URL data and last update time data as indicated at (a) in Fig. 12, and the location information stored in the NV-RAM 14 includes the location information as indicated at (b) in Fig. 12, the step S105 described above is implemented so that the advertisement server 2D is accessed by the MFP 1 which transmits the advertisement data delivery request to the reference URL indicated at (c) in Fig. 12. The request is accompanied by the last update time data, and the product destination data and telephone number data, as indicated at (c) in Fig. 12.

When the advertisement data delivery request is transmitted from the MFP 1 to the advertisement server 2D, the advertisement server 2D initiates the control routine illustrated in the flow chart of Fig. 6. The control routine of Fig. 6 is initiated with step S205 to determine whether the reference URL should be unconditionally changed. In the present Example 4, the negative determination (NO) is obtained in the step S205, as in the Example 1, and the control flow goes to the step S210 to refer to the location/reference URL table, to determine whether there is a possibility of change of the reference URL.

In the Example 4 in which the advertisement server 2D has the location/reference URL table, as indicated in Fig. 3D, so that an affirmative determination (YES) is obtained in step the S210.

Since the affirmative determination (YES) is obtained in the step S210, the control flow goes to step S240 in which the advertisement server 2D refers to the location/reference URL table, to find the received destination country and telephone number of the MFP 1. The step S240 is followed by step S245 to determine whether the location/reference URL table lists the received destination country and telephone number. In the specific example indicated at (c) in Fig. 12, the destination country/telephone number is "81$$$$$$$$$$", wherein $ represents a digit of the telephone number which is not listed in the location/reference URL table. In the step S240, a determination is made as to whether the destination and telephone number are registered in the location/reference URL table of Fig. 3.

In the Example 4, a negative determination (NO) is obtained in the step S245, and the control flow goes to the step S215 and the subsequent steps, as in the Example 1. The steps S215, S220 and S225 in the Example 4 are identical with those in the Example 1, except in that those steps are implemented by the advertisement server 2D. In the step S225, the image file "CameraC.img", last update time, etc. as indicated at (d) in Fig. 12 are transmitted from the advertisement server 2D to the MFP 1.

In the step S130, the advertisement data (image file) received from the advertisement server 2D are displayed on the liquid crystal display 17 of the MFP 1. The step S 130 is followed by the step S140 in which the last update time corresponding to the "PHOTO PRINTING" in the operation/reference URL table is changed to the last update time received from the advertisement server 2D. Thus, one cycle of execution of the control routine of Fig. 5 by the MFP 1 is terminated. As a result, the operation/reference URL table is updated as indicated at (e) in Fig. 12.

<Example 5> In the case of a reply from advertisement server, which requires a change of reference URL (in the case of a change of reference URL according to location/reference URL table, to new reference URL not listed in black list of management server) In the Example 5 described below, the advertisement server 2D is accessed by the MFP 1, and the reference URL is changed according to the location/reference URL table.

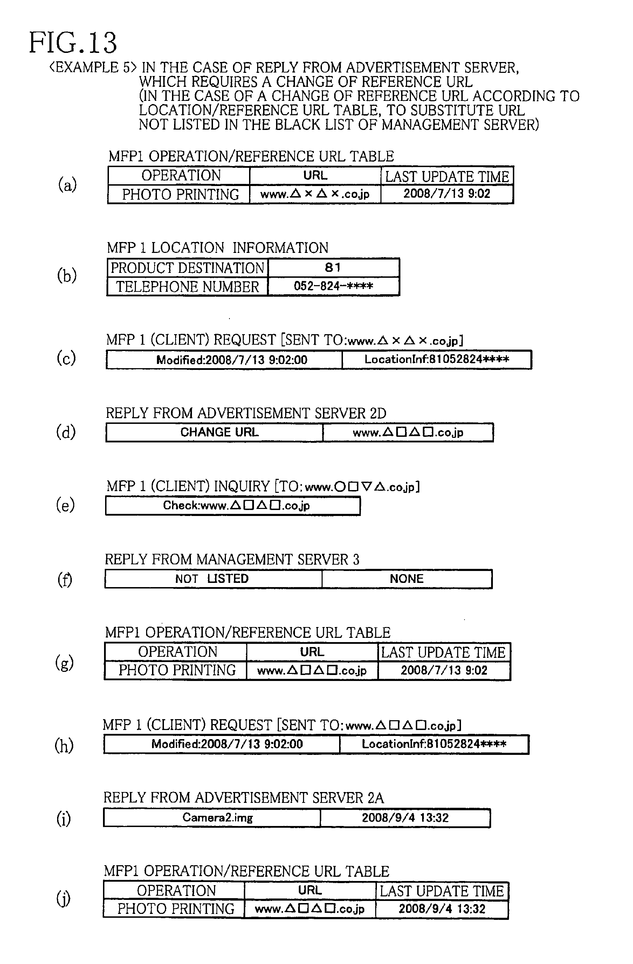

Where the operation/reference URL table stored in the NV-RAM 14 of the MFP 1 includes the URL data and last update time data as indicated at (a) in Fig. 13, and the location information stored in the NV-RAM 14 includes the location information as indicated at (b) in Fig. 13, the step S105 described above is implemented so that the advertisement server 2D is accessed by the MFP 1 which transmits the advertisement data delivery request to the reference URL indicated at (c) in Fig. 13. The request is accompanied by the last update time data, and the product destination data and telephone number data, as indicated at (c) in Fig. 13.

When the advertisement data delivery request is transmitted from the MFP 1 to the advertisement server 2D, the advertisement server 2D initiates the control routine illustrated in the flow chart of Fig. 6. The control routine of Fig. 6 is initiated with step S205 to determine whether the reference URL should be unconditionally changed. In the present Example 5, the negative determination (NO) is obtained in the step S205, as in the Examples 1 and 4, and the control flow goes to the step S210 to refer to the location/reference URL table, to determine whether there is a possibility of change of the reference URL should be changed.

In the Example 5 in which the advertisement server 2D has the location/reference URL table, as indicated in Fig. 3D, so that the affirmative determination (YES) is obtained in step the S210, as in the Example 4.

Since the affirmative determination (YES) is obtained in the step S210, the control flow goes to step S240 in which the advertisement server 2D refers to the location/reference URL table, to find the received destination country and telephone number of the MFP 1. The step S240 is followed by step S245 to determine whether the location/reference URL table lists the received destination country and telephone number.

In the specific example indicated at (c) in Fig. 13, the destination country/telephone number is "81052824****", wherein * represents a digit of the telephone number which is listed in the location/reference URL table. In the Example 5, an affirmative determination (YES) is obtained in the step S245, and the control flow goes to the step S250.

In the step S250, the advertisement server 2D transmits to the MFP 1 a reference URL change request and a new reference URL corresponding to the destination country and telephone number which are listed in the location/reference URL list and which have been received from the MFP 1. The new reference URL is another address or URL of the advertisement server which is different from the advertisement server 2D to which the data delivery request has been transmitted by the MFP 1. The control routine of Fig. 6 is terminated with the step S250.

In the step S250, the reference URL change request in the form of text data "CHANGE URL" accompanied by the new reference URL "www. Δ□Δ□.co.jp" as indicated at (d) in Fig. 13 are transmitted to the MFP 1. The new reference URL "www. Δ□Δ□.co.jp" is the URL assigned to the advertisement server 2A.

The MFP 1 which has received the reference URL change request implements the same steps as in the Example 2. Namely, the URL indicated at (e) in Fig. 13 is accessed by the MFP 1 to inquire the management server 3 to check if the substitute reference URL www.Δ□Δ□.co.jp is included in the black list. To this end, data "Check: www.Δ□Δ□.co.jp" are transmitted to the management server 3, as also indicated at (e) in Fig. 13.

In this case, the management server 3 implements the same steps as in the Example 2. Described in detail, the new reference URL www.Δ□Δ□.co.jp indicated at (e) in Fig. 13 is not listed as any of the problematic URLs in the black list of Fig. 4. Accordingly, data "NOT LISTED" as indicated at (f) in Fig. 13 are transmitted from the management server 3 to the MFP 1.

The MFP 1 which has received the above-described reply from the management server 3 changes the original reference URL corresponding to the photograph printing operation in the operation/reference URL table, to the new reference URL received from the advertisement server 2D. Thus, the original reference URL of the advertisement server 2D corresponding to the photograph printing operation in the operation/reference URL table is changed to the new reference URL, which is the reference URL assigned to the advertisement server 2A, as indicated at (g) in Fig. 13.

After the step S 170 is implemented, the MFP 1 goes back to the step S 105, to initiate the next cycle of execution of the control routine of Fig. 5. Since the original reference URL corresponding to the photograph printing operation in the operation/reference URL table has been changed to the reference URL of the advertisement server 2A, this cycle of execution of the control routine is identical with that in the Example 1 described above.

That is, the advertisement data delivery request is sent to the advertisement server 2A having the reference URL www.Δ□Δ□.co.jp as indicated at (h) in Fig. 13, to ask the advertisement server 2A to deliver the advertisement data. The request is accompanied by the last update time, and the location information including the product destination and telephone number. In response to the advertisement data delivery request from the MFP1, the advertisement server 2A implements the step S225 (or step S230) transmits to the MFP1 the image file "Camera2.img", its last update time, etc. According to the image file received from the advertisement server 2A, the MFP 1 displays an advertising image in the step S 130, and updates the operation/reference URL table to that as indicated at (j) in Fig. 10, in the step S 140, as in the Example 1 described above.

<Example 6> In the case of no reply from advertisement server or management server In the Example 6 described below, the MFP 1 does not receive a reply from the advertisement server 2A, 2B, 2C, 2D or the management server 3, in the Examples 1-5.

In the above-described Examples 1-5, the MFP 1 waits for a reply from the advertisement server 2A, 2B, 2C, 2D in the steps S110-S120, or from the management server 3 in the steps S150-S160.

If the affirmative determination (YES) is obtained in the step S 115 or S 155 as a result of elapsing of the predetermined long time, this affirmative determination indicates a failure of the MFP 1 to receive a reply from the advertisement server 2A, 2B, 2C, 2D or management server 3. In this case, the step S 115 or S 155 is followed by step S 180 in which the liquid crystal display 17 provides an indication that the MFP 1 is in a printing operation. The control routine of Fig. 5 is terminated with the step S 115 or S155.

Where the MFP 1 cannot receive advertisement data from the advertisement server 2A, 2B, 2C, 2D, or any reply from the management server 3 as to whether the new reference URL received from the advertisement server is listed in the black list, the MFP 1 does not display advertisement data or does not change the reference URL, and provides a default indication that the MFP 1 is in the printing operation.

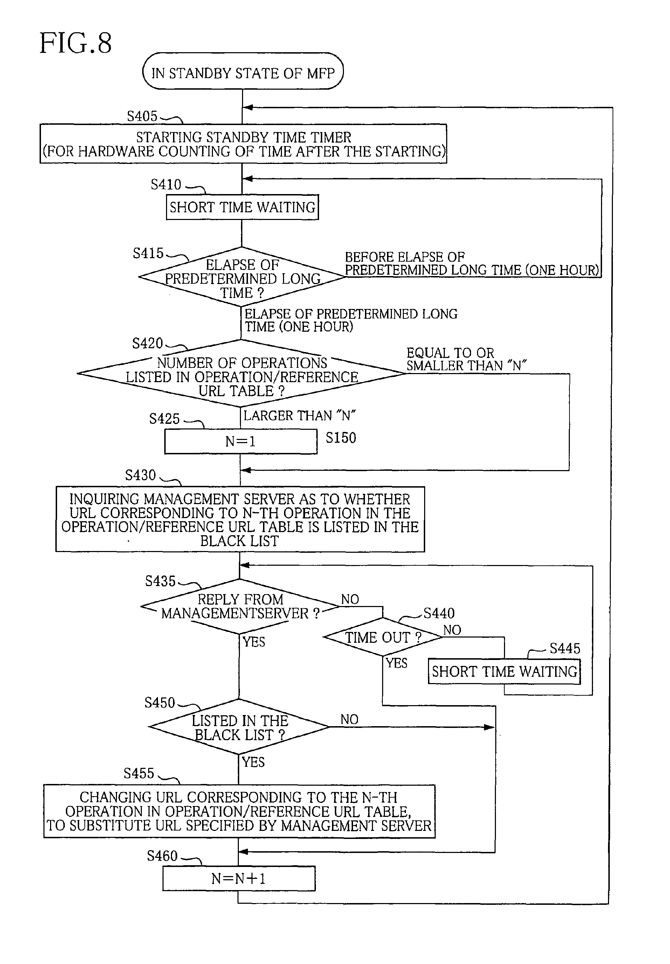

<Example 7> In the case of updating registered URL In the Example 7 described below, the reference URL which corresponds to an operation in the operation/reference URL table and which is listed in the black list is changed according to a control routine of Fig. 8, which is initiated after the MFP 1 is kept in the standby state for a predetermined time. Unlike the control routines of Figs. 5-7 described above with respect to the Examples 1-6, the control routine of Fig. 8 is initiated in the standby state of the MFP 1.

The control routine illustrated in the flow chart of Fig. 8 is initiated with step S405 in which a standby time timer of the MFP 1 is started. After this standby time timer is started, the time is measured by hardware counting of time. Then, the control flow goes to step S410 to wait for a predetermined short time, and to step S415 to determine whether the time measured by the standby time timer has increased to a predetermined long time (for example, one hour). If the measured time is shorter than the predetermined long time, the control flow goes back to the step S410.

If the measured time has increased to the predetermined long time, the step S415 is followed by step S420 to determine whether the number of the operations listed in the operation/reference URL table of Fig. 2A is equal to or smaller than a variable N. In the specific example of the operation/reference URL table of Fig. 2A, the number of the operations is equal to "6".

If the number of the operations is larger than the variable N, the step S420 is followed by step S425 to set the variable N to "1". Then, step S430 is implemented. If the number of the operations is equal to or smaller than the variable N, the control flow goes directly to S430 while skipping the step S425.

In the step S430, the MFP 1 inquires the management server 3 as to whether the reference URL corresponding to the N-th operation in the operation/reference URL table is listed in the black list stored in the management server 3.

When the inquiry from the MFP 1 is received by the management server 3, the control routine of Fig. 7 is initiated by the management server 3. This control routine of Fig. 7 has been described above with respect to the Examples 2 and 3.

The step S430 is followed by step S435 to determine whether a reply from the management server 3 has been received by the MFP 1. If a negative determination (NO) is obtained in the step S435, the control flow goes to step S440 to determine whether a predetermined long time has elapsed. If a negative determination (NO) is obtained in the step S440, the control flow goes to step S445 to wait for a predetermined short time (e.g., several seconds) before the control flow goes back to the step S435 to determine again whether a reply has been received from the management server 3.

If a reply has been received from the managements server 3, that is, if an affirmative determination (YES) is obtained in the step S435, the control flow goes to step S450 to determine whether the reference URL in question is listed in the black list. A negative determination (NO) is obtained in the step S450 when the data "NOT LISTED" have been transmitted from the management server 3, as described above with respect to the Example 2. An affirmative determination (YES) is obtained in the step S450 when the data "BLACK LISTED" have been transmitted from the management server 3, as described above with respect to the Example 3.

If the data "BLACK LISTED" have been received from the management server 3, that is, if an affirmative determination (YES) is obtained in the step S450, the control flow goes to step S455 in which the MFP 1 changes the reference URL of the N-th operation in the operation/reference URL table, to a substitute reference URL specified by the management server 3.

As a result of implementation of the step S455, the reference URL which was registered in the operation/reference URL table and which was thereafter listed in the black list of the management server 3 can be replaced by the suitable substitute reference URL.

The step S455 is followed by step S460. This step S460 is implemented when a negative determination (NO) is obtained in the step S450, or when an affirmative determination (YES) is obtained in the step S440. In the step S460, the variable N is incremented by "1". Then, the control flow goes back to the step S405. Thus, each time the predetermined long time has elapsed (e.g., one hour), the MFP 1 checks if the reference URL corresponding to the N-th operation in the operation/reference URL table is listed in the black list, and replaces the reference URL with the substitute reference URL, if the reference URL is listed in the black list.

[Advantages of the First Embodiment] In the present advertisement delivery system described above, the MFP 1 displays in the step S130 an advertisement according to advertisement data delivered from the advertisement servers 2A-2D. When a new address or URL (an address of a new access point) is received from the advertisement servers 2A-2D, the MFP 1 changes in the step S 170 the address stored in the operation/reference URL table (corresponding to an address memory portion and an update time memory portion), to the received new address. Thereafter, the MFP 1 transmits in the step S105 the advertisement data delivery request to the new address.

Unlike the prior art advertisement delivery system wherein the advertisement servers do not permit a change of the access point address, the present advertisement delivery system is arranged such that the advertisement servers informs the MFP 1 of a change of the address of the access point (advertisement server) to be accessed for delivery of the advertisement data to the MFP1, as described above with respect to the advertisement server 2B in the Example 2, so that the MFP 1 is able to display an advertisement delivered from the most suitable access point (delivery point).

Where the advertisement delivery system includes a multiplicity of clients (like the MFP 1) existing in a network, a change of the access point address makes it possible to prevent concentration of access by all of the clients to only the address that was initially set. Where the advertisement servers 2A and 2B are independent hardware devices, for example, a change of the address from that of the advertisement server B to that of the advertisement serve A permits effective dispersion of the accessing load of the system.

The advertisement serve 2D delivers advertisement data corresponding to the location of the MFP 1, on the basis of the location information received from the MFP 1, as in the Example 4, or inform the MFP 1 of the address of a new access point to be accessed for delivery of the advertisement data corresponding to the location of the MFP 1, as in the Example 5. In the Example 5, the MFP 1 obtains an access to the new access point, so that the MFP 1 is provided with the advertisement data suitable for the local area in which the MFP 1 is located.

Thus, the advertisement servers 2A and 2D of the present advertisement delivery system permit delivery of the advertisement data suitable for the local area of the MFP 1. Further, the advertisement servers 2A-2D are configured to implement the steps S215-S230 to delivery to the MFP 1 the advertisement data the last update time of which is different from the last update time received from the MFP 1.

Accordingly, the present advertisement data delivery system permits the MFP 1 to receive the new advertisement data different from the already received advertisement data, so that the MFP 1 displays new advertisement different from the already displayed advertisement.

The present advertisement delivery system is further configured such that the management server 3 has the black list listing the addresses of the problematic access points (problematic URLs) such as the advertisement server 2C, an access to which should be avoided for some reason or other. The MFP 1 inquires the management server 3 in the step S 145 as to whether the new address (the address of a new access point) received from the advertisement server 2C is listed in the black list. If the new address is listed in the black list, the management server 3 informs the MFP 1 of a substitute address (substitute URL) to be accessed by the MFP 1.

Thus, the present advertisement delivery system prevents the MFP 1 from obtaining an access to any problematic address (problematic access point), and is configured to inform the MFP 1 of a substitute address (substitute access point) to be accessed by the MFP 1, so that the MFP 1 as a client can receive appropriate advertisement data from the substitute access point and display appropriate advertisement according to the received advertisement data.

The advertisement delivery system is further configured such that the MFP 1 inquires the management server 3 in the step S430 as to whether the URL registered in the operation/reference URL table is listed in the black list. If the registered URL is listed in the black list, the management server 3 informs the MFP 1 of a substitute address (substitute URL) to be accessed by the MFP1.

In addition, the MFP 1 is configured to implement the step S 180 to display information according to default indication data if the MFP 1 does not receive a reply from the advertisement server 2A, 2B, 2C, 2D or management server 3. Therefore, it is possible to prevent the MFP 1 from failing to provide any indication in the event of a failure to receive advertisement data, or from obtaining an access to the URL listed in the black list of the management server 3.

In the first embodiment, the advertisement delivered from the advertisement server is automatically displayed on the liquid crystal display 17, when the printing operation by the printer mechanism 15 is initiated. When the printing operation is performed by the printer mechanism 15, there is a comparatively high possibility that the operator stays near the MFP 1, so that the operator has a high degree of likelihood to see the advertisement displayed on the liquid crystal display 17.

A second embodiment of this invention will be described. In the first embodiment, the advertisement is displayed when the printing operation by the printer mechanism 15 is initiated. In the present second embodiment, the advertisement is displayed when a scanning operation by the scanner mechanism 16 is initiated. In the other aspects, the second embodiment is identical with the first embodiment. It is noted that the second embodiment may be modified to display the advertisement also when the printer mechanism 15 initiates the printing operation according to image data obtained by the scanning operation.

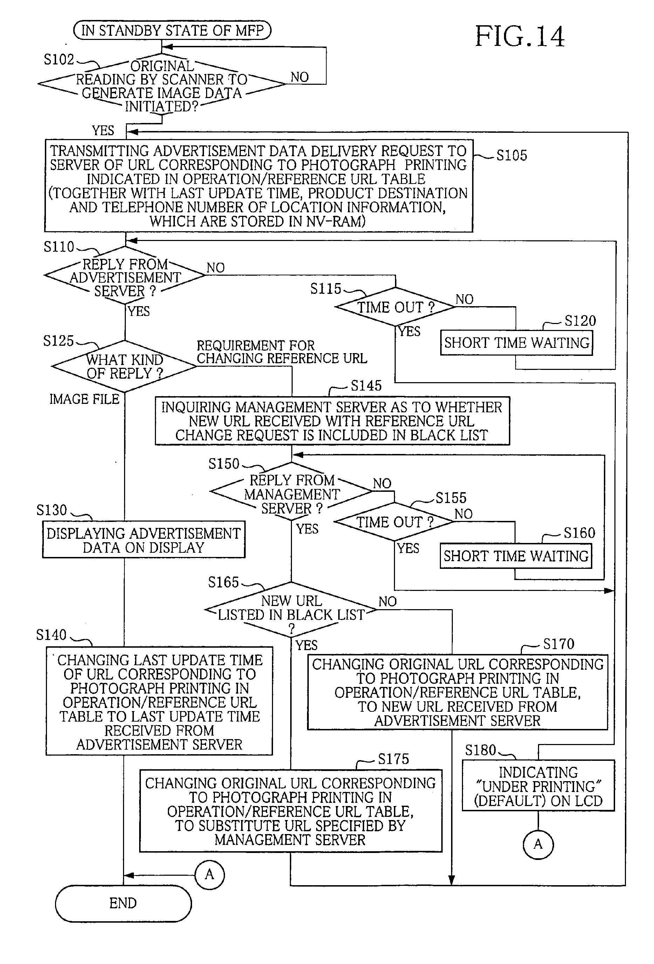

In the second embodiment, a control routine illustrated in the flow chart of Fig. 14 is executed while the MFP 1 is placed in the standby state. This control routine is initiated with step S 102 to determine whether the scanner mechanism 16 has initiated an operation to read the original to generate image data. This step S102 is repeatedly implemented until an affirmative determination (YES) is obtained. When the affirmative determination is obtained in the step S102, the control flow goes to the step S105 and the subsequent steps described above with respect to the first embodiment of Fig. 5.

[Advantages of the Second Embodiment] In the second embodiment, the advertisement delivered from the advertisement server is automatically displayed on the liquid crystal display 17 when the operation of the scanner mechanism 16 to read the original set by the operator is initiated. When the scanning operation is performed by the scanner mechanism 16, there is a comparatively high possibility that the operator stays near the MFP 1, so that the operator has a high degree of likelihood to see the advertisement displayed on the liquid crystal display 17.

[Modifications of Illustrated Embodiments] While the preferred embodiments of this invention have been described above, it is to be understood that the present invention is not limited to the details of the illustrated embodiment, but may be embodied with various modifications.

Although the four advertisement servers 2A-2D have been described for the purpose of illustrating different situations of the advertisement delivery system, the advertisement system according to the present invention may include at least one advertisement server.

While the advertisement server 2C has been described as a problematic server an access to which should be avoided, it is to be understood that the advertisement delivery system of the present invention need not include such a problematic advertisement server.

The illustrated advertisement delivery system includes the management server 3. However, the advertisement delivery system according to the principle of this invention need not include the management server 3.

In the illustrated Example 2, the advertisement server 2B transmits to the MFP 1 the reference URL change request accompanied by a new reference URL, in response to the advertisement data delivery request received from the MFP 1. However, the advertisement server 2B may transmit to the MFP 1 the advertisement data stored in the advertisement server 2B, in addition to the reference URL change request and the new reference URL. The advertisement server 2B may provide the MFP 1 with either the advertisement data or the new reference URL, or both of the advertisement data and the new reference URL. Where the MFP 1 receives at least one of the reference URL change request, new reference URL and advertisement data, the MFP 1 may or may not display the advertisement data on its liquid crystal display 17.

The illustrated advertisement delivery system is arranged such that the reference URL change request and the new reference URL are transmitted from the advertisement server to the MFP 1, and such that the MFP 1 transmits the advertisement data delivery request to the new reference URL immediately after the MFP 1 is informed by the management server 3 that this new reference URL is not listed in the black list. However, this arrangement is not essential. For instance, the MFP 1 terminates an operation to display the advertisement data when the MFP 1 has received the reference URL change request and the new reference URL, or when the MFP 1 has been informed by the management server 3 that the new reference URL is not listed in the black list. In this case, the MFP 1 stores the received new reference URL in the NV-RAM 14, so that the MFP 1 transmits the advertisement data delivery request to the new reference URL upon the next photograph printing operation.

The illustrated advertisement data delivery system is further arranged such that the MFP 1 transmits to the advertisement servers the location information in the form of the product destination and telephone number, so that the advertisement server can recognize the local area in which the MFP 1 is located. However, this arrangement is not essential. For example, the MFP 1 has an own identification (ID number), and the advertisement server recognizes the location of MFP 1 on the basis of the received identification. In this case, the information to be transmitted from the MFP 1 to the advertisement server does not include the location information, and the volume of the information to be transmitted from the MFP 1 is accordingly reduced, making it possible to reduce a data processing load of the MFP 1 and advertisement server.

The operation of the advertisement delivery system to display the advertisement on the MFP 1 has been described in detail, such that the operation is performed when the photograph printing operation of the MFP 1 is started. However, the operation to display the advertisement may be performed when any one of the other five operations of the MFP 1 indicated in Fig. 2A is started. In Fig. 2A, "DEFAULT" corresponds to the standby state of the MFP 1, which is established when the MFP 1 is kept at rest for more than a predetermined time, that is, when the affirmative determination (YES) is obtained in the step S415.

Since the operation to display the advertisement during the photograph printing operation of the MFP 1 has been described, Figs. 3A and 3D illustrate images of cameras, a photograph printer, a 3-leg camera stand, photograph paper, and a video camera. The advertisement data displayed during the other operations (scanning, facsimile operations, etc.) of the MFP 1 represent images relating to those operations.

During the facsimile operation, for example, the MFP 1 displays an advertisement of a new facsimile device or consumables used by the facsimile device. During the scanning operation, the MFP 1 displays an advertisement relating to a scanner. Namely, the reference URLs registered in the operation/reference URL table identify the advertisement sources that deliver advertisements corresponding to the respective different operations (functions) of the MFP 1.

Thus, the client in the form of the MFP 1 in the illustrated embodiment can perform a plurality of functions and has a memory portion which stores URLs of advertisement servers corresponding to the respective different functions. When the client performs one of the functions, the client displays an appropriate advertisement which corresponds to that function and in which the user of the MFP 1 (client) is interested.

Preferably, the client is configured to transmit the advertisement data delivery request to the advertisement server the URL of which is stored in relation to the specific operation of the client, when this specific operation is started. Thus, the updated advertisement data are obtained by the client immediately after the operation is started, that is, when the advertisement data are required to be displayed. Accordingly, the number of unnecessary communications of the client with the advertisement servers can be made smaller in this advertisement data delivery system than in a system wherein the advertisement data are obtained before the operations of the client are started, irrespective of whether the advertisement data are required to be displayed.

In the illustrated advertisement delivery system, the product destination and telephone number are transmitted as the location information to the advertisement servers 2A-2D. However, other information relating to the MFP 1 may be transmitted to the advertisement servers 2A-2D. For instance, local area codes may be assigned to respective local areas such that the local area codes can be recognized by the MFP 12 and advertisement servers 2A-2D. Alternatively, a language used by the MFP 1 and a time difference at the location of the MFP 1 with respect to the Greenwich Civil Time (GCT) are transmitted from the MFP 1 to the advertisement servers 2A-2D, so that the advertisement servers 2A-2D recognize the location (area or country) in which the MFP 1 is located, on the basis of the language and the time difference. The language is necessary to display the characters on the liquid crystal display 17, while the time difference with respect to the Greenwich Civil Time is necessary to set the time in the MFP 1. Values representative of the language and the time difference are used as local information of the MFP 1 that are transmitted to the advertisement servers.

The illustrated advertisement delivery system is arranged such that the advertisement servers 2A-2D transmit to the MFP 1 the oldest one of image files updated after the last update time received from the MFP 1, or the oldest image file stored therein if none of the image files stored therein are older than the last update time received from the MFP 1. However, this arrangement is not essential. For instance, the advertisement server may select at random one of image files corresponding to a last update time other than the last update time received from the MFP 1, and transmits to the MFP 1 the selected image file.

In the illustrated advertisement delivery system, the reference URLs registered in the operation/reference URL table are replaced by the new or substitute URLs received from the advertisement servers 2A-2D or management server 3. However, the new or substitute URLs may be stored in addition to the original URLs registered in the table.

## Claims

1. An advertisement delivery system comprising:
at least one advertisement server (2);
a client (1) communicable with the at least one advertisement server through a network and configured to display an advertisement according to advertisement data delivered from the at least one advertisement server,
wherein the client (1) includes:
an address memory portion (14) which stores an address in the network;
a delivery requesting portion (11-13, 21) configured to transmit, to the address stored in the address memory portion, a data delivery request requesting the corresponding advertisement server to delivery data to the client;
a data obtaining portion (11-13, 21) configured to obtain the data delivered from the advertisement server in response to the data delivery request;
an advertisement display portion (17) configured to display the advertisement according to the advertisement data, if the data obtained by the data obtaining portion include the advertisement data; and
an address adding portion (11-13) configured to store another address in the address memory portion (14) if the data obtained by the data obtaining portion include said another address which is different from the address of the advertisement server to which the data delivery request has been transmitted by the delivery requesting portion,
and wherein at last one of the at least one advertisement server (2) includes:
a delivery data determining portion configured to determine at least one of the advertisement data and said another address to be delivered to the client, where the advertisement server receives the data delivery request; and
a data delivery portion configured to deliver data including the at least one of the advertisement data and said another address which has been determined by the delivery data determining portion.

2. The advertisement delivery system according to claim 1, wherein the client (1) further includes a commanding portion (11-13, 21) which is operated, when said another address is stored in the address memory portion by the address adding portion, to command the delivery requesting portion to transmit the data delivery request to said another address.

3. The advertisement delivery system according to claim 1 or 2, wherein said at least one advertisement server in said network includes a plurality of advertisement servers including a first advertisement server (2B) and a second advertisement server (2A),
and wherein when the delivery data determining portion of the first advertisement server (2B) determines that said another address is to be delivered to the client, the data delivery portion delivers data including the address of the second advertisement server (2A) as said another address.

4. The advertisement delivery system according to any one of claims 1-3, wherein the data delivery portion delivers at least one of the advertisement data corresponding to a local area in which the client (1) is located, and the address corresponding to said local area.

5. The advertisement delivery system according to any one of claims 1-3, wherein said at lest one of the at least one advertisement server (2) further includes a local area specifying portion configured to specify a local area in which the client (1) is located, on the basis of client information received from the client, where the advertisement server receives the data delivery request from the client,
and wherein the delivery data determining portion determines whether the advertisement data corresponding to the local area specified by the local area specifying portion can be delivered, the delivery data determining portion determining that the advertisement data corresponding to the specified local area should be delivered if the delivery data determining portion determines that the advertisement data corresponding to the specified local area can be delivered, and determining that an address of the at least one of the at least one advertisement server from which the advertisement data corresponding to the specified local area can be delivered should be delivered if the data delivery determining portion determines that the advertisement data corresponding to the specified local area cannot be delivered.

6. The advertisement delivery system according to claim 5, wherein the local area specifying portion receives, as the client information, a telephone number assigned to the client (1), and specifies the local area in which the client is located, on the basis of the telephone number.

7. The advertisement delivery system according to claim 5, wherein the local area specifying portion receives, as the client information, a language used by the client (1), and a time difference of the client with respect to the Greenwich Civil Time, and specifies the local area in which the client is located, on the basis of the language and the time difference.

8. The advertisement delivery system according to any one of claims 1-7, wherein the client (1) further includes an update time memory portion (14) which stores an update time of the advertisement data received from each of the at least one advertisement server (2), the delivery requesting portion (11-13, 21) transmitting to the advertisement server the update time stored in the update time memory portion, when the delivery requesting portion transmits the data delivery request to the advertisement server,
and wherein the data delivery portion of said at least one of the at least one advertisement server delivers to the client the advertisement data the update time of which is different from the update time received from the client, when the advertisement server receives the data delivery request from the delivery requesting portion of the client.

9. The advertisement delivery system according to any one of claims 1-8, further comprising a management server (3) communicable with the client (1) through the network, and wherein the management server includes:
an access-restricted-address determining portion configured to determine whether the address received from the client is an access-restricted address an access to which is restricted; and
a substitute address delivery portion configured to deliver to the client (1) a substitute address in place of the access-restricted address, where the access-restricted-address determining portion determines that the address received from the client is the access-restricted address,
and wherein the client (1) further includes an obtained-address inquiry portion configured to transmit to the management server the data including said another address obtained by the data obtaining portion as the data delivered from the advertisement server, and to inquire the management server as to whether said another address is the access-restricted address,
and wherein said address adding portion (11-13) stores the substitute address in the address memory portion (14) where the substitute address is delivered from the management server to the client as a result of a determination by the obtained-address inquiry portion.

10. The advertisement delivery system according to any one of claims 1-9, further comprising a management server (3) communicable with the client (1) through the network, and wherein the management server includes:
an access-restricted-address determining portion configured to determine whether the address received from the client is an access-restricted address an access to which is restricted; and
a substitute address delivery portion configured to deliver to the client (1) a substitute address in place of the access-restricted address, when the access-restricted-address determining portion determines that the address received from the client is the access-restricted address,
and wherein the client (1) further includes a stored-address inquiry portion configured to transmit to the management server the address stored in the address memory portion, and to periodically or non-periodically inquire the management server as to whether the address stored in the address memory portion is the access-restricted address,
and wherein said address adding portion (11-13) stores the substitute address in the address memory portion (14) when the substitute address is delivered from the management server to the client as a result of a determination by the stored-address inquiry portion.

11. A client communicable with at least one advertisement server (2) through a network and configured to display an advertisement according to advertisement data delivered from the at least one advertisement server, the client comprising:
an address memory portion (14) which stores an address in the network;
a delivery requesting portion (11-13, 21) configured to transmit, to the address stored in the address memory portion, a data delivery request requesting the corresponding advertisement server to delivery data to the client;
a data obtaining portion (11-13, 21) configured to obtain the data delivered from the advertisement server in response to the data delivery request;
an advertisement display portion (17) configured to display the advertisement according to the advertisement data, if the data obtained by the data obtaining portion include the advertisement data; and
an address adding portion (11-13) configured to store another address in the address memory portion (14) if the data obtained by the data obtaining portion include said another address which is different from the address of the advertisement server to which the data delivery request has been transmitted by the delivery requesting portion.

12. The client according to claim 11, further comprising a printing portion (15) configured to print an image according to image data,
and wherein the data obtaining portion (11-13, 21) is operable to obtain the image data from an external device (16, 19, 22, 33), and the advertisement display portion (17) displays the advertisement when the printing portion has initiated the image according to the image data obtained by the data obtaining portion.

13. The client according to claim 12, further comprising a scanning portion (16) configured to scan an original carrying an image, to generate image data representative of the image,
and wherein the data obtaining portion (11-13, 21) is operable to obtain the image data generated by the scanning portion, and the advertisement display portion (17) displays the advertisement when the scanning portion has initiated an operation to scan the original, or when the printing portion has initiated an operation to print an image according to the image data generated by the scanning portion.

14. An advertisement server communicable with a client through a network and configured to deliver to the client advertisement data according to which the client displays advertisement, the advertisement server comprising:
a delivery data determining portion configured to determine at least one of the advertisement data and another address to be delivered to the client, where the advertisement server receives the data delivery request, said another address being different from the address of the advertisement server to which a data delivery request has been transmitted from the client; and
a data delivery portion configured to deliver data including the at least one of the advertisement data and said another address, which has been determined by the delivery data determining portion.

15. A management server communicable with at least one advertisement server and a client through a network, the management sever comprising:
an access-restricted-address determining portion configured to determine whether the address received from the client is an access-restricted address an access to which is restricted; and
a substitute address delivery portion configured to deliver to the client a substitute address in place of the access-restricted address, where the access-restricted-address determining portion determines that the address received from the client is the access-restricted address.
